# DEMANDE DE BREVET EUROPEEN

(11) **EP 2 442 535 A2**
(43) Date de publication de la demande: **18.04.2012**
(21) Numéro de dépôt: 11290472.7
(22) Date de dépôt: 12.10.2011
(51) Int. Cl.: H04L 29/08

(54) **Procédé et système pour l'affichage sur un téléphone portable, d'informations disponibles sur Internet, concernant un objet ou un lieu, grâce à une balise**

(30) Priorité: 13.10.2010 FR 1004023; 07.10.2011 FR 1103059
(71) Demandeur: Levik, Shahmirian, 94140 Alfortville (FR)
(72) Inventeur: Levik, Shahmirian, 94140 Alfortville (FR)

(57) **Abrégé**

L'invention concerne le domaine de l'information, notamment à l'usage d'utilisateurs (4) mal et non-voyants.
L'invention concerne un procédé et un système pour la reconnaissance d'un lieu, ou un objet à l'aide d'un dispositif indicateur sans fil (3) (BALISE BLUETOOTH@, WIFI, IRDA,...) codé, afin d'accéder à des informations ciblées (10) avec un dispositif de télécommunication portable (6) (téléphone portable, ordinateur portable,...) relié à INTERNET (8) par un système sans fil (3G, WIFI, ...).
Un algorithme simple et unique implémenté dans un programme et installé dans le dispositif de télécommunication portable, calcule, l'adresse d'un emplacement unique sur INTERNET (URL) en utilisant la caractéristique unique de la balise (Ex. Adresse MAC d'un dispositif WIFI ou BLUETOOTH, UUID Universally Unique Identifier,...).
Par ce procédé un emplacement sur INTERNET et lié à une seul balise (3), par conséquence, l'objet ou le lieu marqué par la balise est aussi lié à un seul et unique emplacement sur INTERNET, alors ledit programme peut afficher les informations disposées à l'URL lié à chaque balise détectée, sans avoir besoin d'être mise à jour.
L'invention apporte une solution valable, au problème de stockage des informations destinées aux utilisateurs actuellement stockées sur les balises, elle permet aussi une mise à jour en temps réel des informations par INTERNET.

## Description

### DOMAINE TECHNIQUE DE L'INVENTION

L'invention concerne le domaine de l'information, notamment à l'usage d'utilisateurs mal et non-voyants.

Dans les restaurants cette invention apporte une solution technique aux handicapés visuels pour accéder aux menus, sans l'aide d'une personne voyante, avec un téléphone portable équipé d'une synthèse vocale et INTERNET.

L'invention peut être utilisée pour d'autres types d'handicapes, qui privent les personnes atteintes de l'accès à l'information, (ex. un handicapé en chaise roulante n'ayant pas accès aux menus affichés dans un fast-food à cause des gens debout dans les queues).

Avec la présente invention l'affichage des informations ou des panneaux publicitaires peut être accessible par des personnes non-voyantes.

### ETAT DE LA TECHNIQUE ANTERIEURE

Le besoin d'obtenir des informations liées à un Objet ou un lieu existe depuis longtemps, dans différents contextes comme par exemple celui de la mise à disposition des informations pour des personnes handicapées (Ex. l'affichage des plans de sortie de secoure en braille ou en gros caractères pour les mal et non-voyants, ....), diverses solutions techniques ont été développées afin de répondre en partie à ce besoin.

Avec les nouvelles technologies sans fil, il est possible désormais de vocaliser des messages prédéfinis pour livrer des informations limités pour indiquer le nom d'un bâtiment ou le numéro d'un guichet. Les dispositifs actuels se regroupent dans deux catégories :
1. Des balises sonores (ex. annonce la couleur active des feux tricolore dans les carrefours)
2. Des balises Bluetooth d'information.

1. La balise sonore, est un dispositif électrique possédant un mini système d'exploitation et un haut-parleur, capable de vocaliser des messages contenus dans une carte mémoire. La lecture du message est enclenchée par une télécommande que l'utilisateur doit acheter. Le message préenregistré est utilisé pour identifier un endroit ou livrer quelques informations, par exemple ils peuvent annoncer le nom et le numéro d'un guichet, ou prévenir si le feu tricolore dans la rue est en position vert ou rouge. Il n'est pas possible d'interagir avec une balise sonore, par exemple on ne peut pas choisir dans une liste des noms et valider pour obtenir plus d'informations, les messages livrés par la balise sonore sont limités par le volume de stockage de la carte mémoire interne de la balise, dans certains endroits le message vocal peut être abrégé pour éviter la nuisance sonore, comme dans les hôpitaux, ou à l'inverse le message livré par la balise peut-être rendu incompréhensible à cause du bruit ambiant, comme dans des gares ferroviaires. Une balise sonore nécessite l'intervention d'un technicien à chaque changement de message, il faut retirer la carte mémoire afin de modifier le message et la remplacer. Avec le temps la qualité des hauts parleurs, peut être dégradée. Les balises sonores sont trop chères par leur conception complexe et empêchent une utilisation généralisée.
2. La balise BLUETOOTH® d'information est une version récente des balises sonores, qui continue à utiliser le même principe, le message est stocké au niveau de la balise BLUETOOTH®, cela nécessite un dispositif électronique important pour stocker le message, le traiter et finalement le transmettre à l'utilisateur, le message transmis est unilatérale et l'utilisateur ne peut pas interagir avec le système. Le produit est trop cher et la mise en place du produit nécessite l'intervention de techniciens.

### SOLUTION TECHNIQUE

La présente invention propose une solution technique pour le stockage des informations, car elles sont stockées sur un serveur accessible par INTERNET et non dans la balise.

Les dites informations peuvent être modifié via une interface WEB dédiée, ce qui permet de changer les informations disponible en temps réel et facilement.

Un objet de l'invention est un procédé qui permet à l'utilisateur d'accéder à de véritables pages web navigables et interactives.

### EXPOSE DE L'INVENTION

L'invention concerne un procédé et un système pour délivrer des informations liées à un Objet ou un lieu à un utilisateur. Dans une phase initiale lesdites informations sont stockées informatiquement dans un serveur accessible par INTERNET. Un dispositif indicateur sans fil (BLUETOOTH®, WIFI, IRDA,...) possédant au moins une caractéristique unique (Ex. Adresse MAC d'un dispositif WIFI ou BLUETOOTH, UUID Universally Unique Identifier,...) et au moins un identifiant simple (Ex. SSID, BLUETOOTH® Device Name, ...) est disposé à la proximité immédiate dudit objet ou dudit lieu. Selon le procédé (P1 expliqué plus en aval) conforme à l'invention, un lien virtuel est établi entre desdites informations et ledit dispositif indicateur sans fil, afin qu'un seul et unique lien URL (Identifiant Uniformisé de Ressource) corresponde audit dispositif indicateur sans fil. Un programme utilisant le procédé (P2 expliqué plus en aval) conforme à l'invention, permet la détection et l'identification dudit dispositif indicateur sans fil, ledit programme est installé sur un dispositif de télécommunication portable (téléphone portable, ordinateur portable,...) relié à INTERNET par un système sans fil (GSM, 3G, 4G, WIFI, ...).

Ledit utilisateur (ex : une personne non-voyante) à l'approche d'un lieu (ex : un restaurant), active ledit programme, installé sur ledit dispositif de télécommunication portable (ex : son téléphone portable). Une phase de détection et d'identification dudit dispositif indicateur sans fil (ex : une balise BLUETOOTH® avec une adresse MAC unique et un identifiant simple comme le nom du restaurant), est entamée. Avec l'aide de l'IHM (interface homme machine) dudit programme, l'utilisateur sélectionne au moins un dispositif indicateur sans fil détecté. Ledit programme selon les procédés (P1 et P2), conforme à l'invention, ouvre une connexion INTERNET sans fil (GSM, 3G, 4G, WIFI, ...), pour afficher la page web unique correspondant à ladite balise, sans avoir eu besoin de se connecter à ladite balise elle-même. L'utilisateur peut alors avoir accès auxdites informations concernant ledit restaurant (ex : les menus, les prix,...).

La présente invention propose à cet effet,

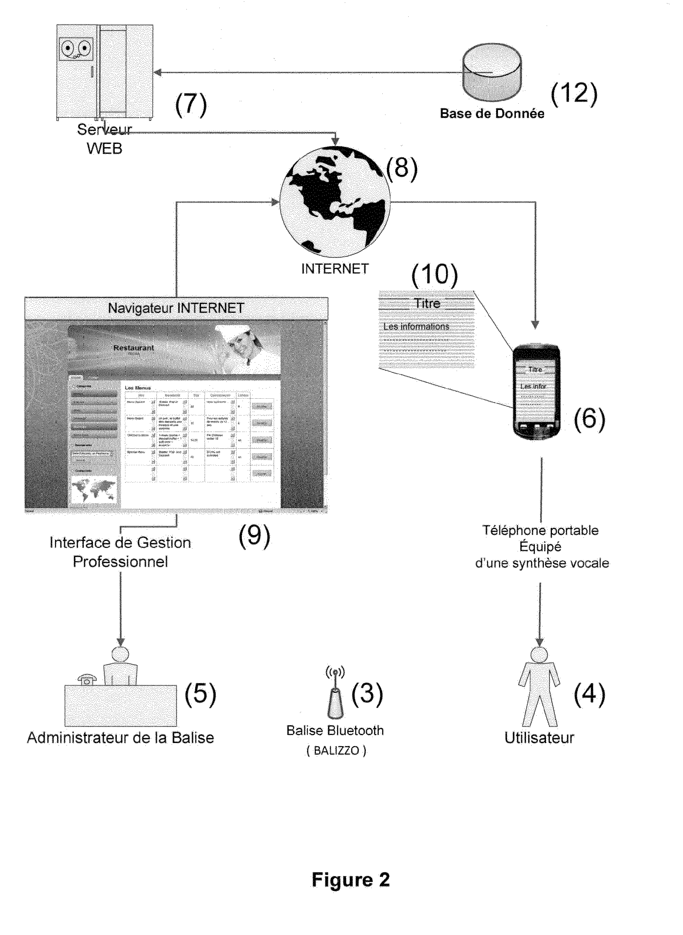

P1. Le procédé de reconnaissance d'un objet ou un lieu à l'aide d'un dispositif indicateur sans fil (BLUETOOTH®, WIFI, IRDA, ...). Il s'agit d'utiliser au moins un dispositif indicateur sans fil (BLUETOOTH®, WIFI, IRDA,...) (3 Figure 2) pour marquer, un lieu ou un objet. Nous allons utiliser le terme « Balise » pour ledit dispositif indicateur sans fil. L'unicité dudit marquage est assurée par une caractéristique unique de ladite Balise, par conséquence la détection et la reconnaissance de ladite Balise ne peuvent indiquer qu'un seul et unique objet ou lieu. Après avoir associé ladite Balise et ledit objet ou ledit lieu, nous avons besoin de connaître l'emplacement des informations destinées audit objet ou audit lieu, dans les solutions technique existantes la création d'une table de correspondance est nécessaire pour associer chacune desdites balises et l'emplacement des informations correspondantes, mais étant donné que les phases de détection et de reconnaissance desdites Balises doivent être implémentées dans un dispositif de télécommunication portable, le stockage de la dite table de correspondances pose problème, car l'installation de chaque nouvelle balise nécessite une mise à jour dans ladite table de correspondance pour assurer le bon fonctionnement et la cohérence des informations délivrées à l'utilisateur.

Le nouveau procédé, proposé par la présente invention, nous permet de résoudre ce problème technique important. Il s'agit de réserver un emplacement unique accessible par Internet, ou par un réseau informatique, pour chaque Balise. Il existe alors un emplacement unique sur INTERNET (URL) pour déposer des informations concernant chaque Balise et inversement il n'existe qu'une seule Balise pour chaque emplacement sur INTERNET (URL). Nous pouvons alors constituer ledit emplacement unique sur INTERNET (URL), correspondant à chacune desdites Balises, en utilisant la caractéristique unique de chaque Balise. Par exemple nous allons réserver le nom de domaine www.MonDomaine.fr, et nous allons créer, deux emplacements avec les URL suivantes
1. www.MonDomaine.fr/**00015b5zde**.html
2. www.MonDomaine.fr/**00052223ee**.html

Les parties mises en gras des URL correspondent respectivement à l'adresse MAC des Balisel et Balise2. Nous allons implémenter l'algorithme unique suivant dans un programme installé sur un téléphone portable.

(www.MonDomaine.fr/)+L'adresse MAC de la BALISE détectée+ (.HTML)

On commence par la phase de la détection de ladite balise. Ledit logiciel installé dans le téléphone portable utilisant son module Bluetooth®, recherche ledit code dans l'identifiant des appareils Bluetooth® environnants, suite à la détection d'au moins une balise (3 Figure 2) contenant ledit code dans son identifiant, ladite adresse MAC est récupérée, et concaténé avec le nom de domaine Internet (préalablement réservé est pointé vers le serveur WEB )(7 Figure 2) pour créer un lien Internet (URL), ladite adresse MAC est unique, donc ledit lien Internet est unique et pointe vers une page WEB unique.

Dans cet exemple, après une phase de détection et de reconnaissance (Selon le procédé P2 expliqué plus en amont) d'une desdites Balises, le programme est capable de diriger l'utilisateur sur la bonne page d'information sans avoir besoin de consulter une table de correspondance.

Avantageusement ledit programme n'a pas besoin de parcourir plusieurs dizaines de lignes d'enregistrement dans la table de correspondance, l'invention permet à l'utilisateur d'accéder à l'information plus rapidement.

Avantageusement l'utilisateur peut accéder à l'information en temps réel en cas de modification dans le contenu des URL.

Avantageusement ladite Balise peut être affectée à un autre objet ou lieu sans avoir besoin de modifier ledit programme installé sur le portable de l'utilisateur.

P2. Un procédé d'encodage et de reconnaissance d'un dispositif indicateur sans fil (BLUETOOTH®, WIFI, IRDA,...) (3 Figure2). La phase de détection et la reconnaissance de ladite Balise selon le procédé P2 consiste à utiliser le composant sans fil dudit dispositif de télécommunication portable, pour détecter et reconnaître les informations émises par la dite Balise (adresse MAC de la Balise ou un nom). Ledit composant sans fil détecte et récolte des informations de tous les dispositifs sans fil qui se trouve à sa portée. Comment alors distinguer ladite Balise d'un autre émetteur sans fil (un autre téléphone portable ou un routeur WIFI dans le voisinage)? Dans les solutions techniques existantes une liste de toutes lesdites Balises est créée dans le dispositif de télécommunication sans fil, permettant l'identification de ladite Balise détectée, mais cela signifie que pour chaque balise détectée, une comparaison avec une liste de plusieurs lignes serait nécessaire, une phase de détection plus longue et une consommation d'énergie plus importante et un temps de réponse plus long constitue un vrai problème, sans compter la mise à jour obligatoire de ladite liste avec la mise en place de chaque nouvelle Balise. Le nouveau procédé, proposé par la présente invention, nous permet de résoudre ce problème technique important.

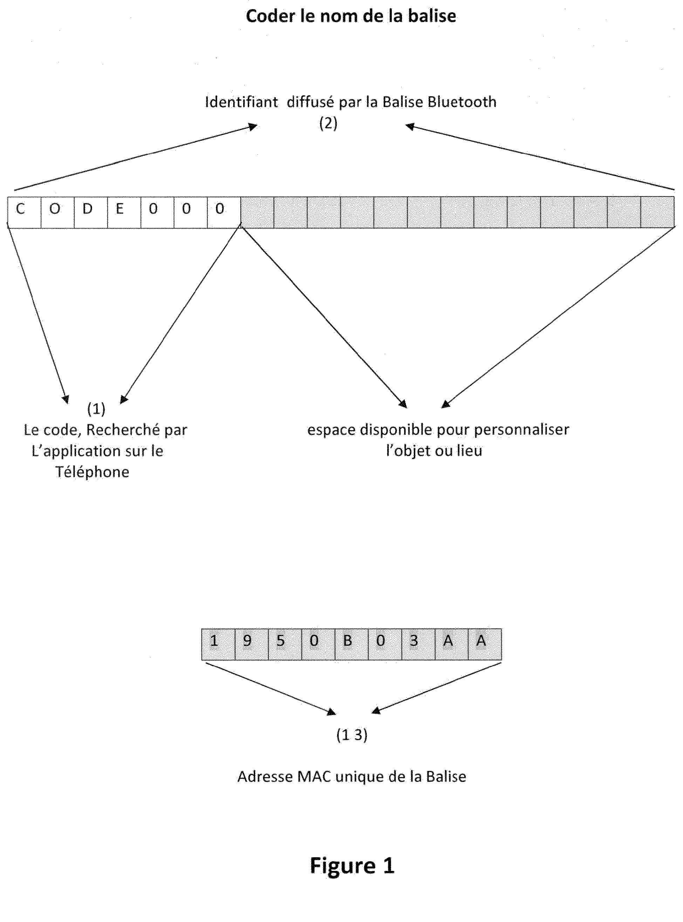

Malgré la nécessitée d'une caractéristique unique desdites Balises pour la création d'un lien virtuel unique entre lesdites Balises et l'emplacement unique sur INTERNET (URL),ladite caractéristique unique ne peut pas constituer un objet de recherche pendant la phase de la détection et la reconnaissance de ladite Balise, car nous serions obligés de conserver ces caractéristiques dans une liste pour la comparaison, et cela pose problème comme expliqué précédemment. La solution apportée par le procédé P2, est d'inclure dans les informations émises par ladite Balise, un code unique mais qui est commun à toute lesdites Balises à rechercher. Par exemple en utilisant un émetteur BLUETOOTH® en tant que balise (3 Figure 2), ladite Balise diffus un identifiant de 20 caractères (2 Figure 1) en plus de son adresse MAC unique, un code unique d'au moins 5 caractères (1 Figure 1) est intégré dans l'identifiant de chaque Balise. Par exemple, un nom nouvellement inventé (ex. LODESH1). Lors de la recherche dudit code, par le logiciel installé sur le téléphone portable, la simple détection dudit code, permet l'identification de ladite Balise.

Avantageusement le programme installé sur ledit dispositif de télécommunication portable, ne recherche qu'un seul et unique code parmi des dizaines d'identifiants des dispositifs sans fil, non recherchés environnants (les autres téléphones portables, le routeur WIFI du voisin, ...), cela assure une recherche efficace et rapide desdites Balise.

La combinaison des deux procédés P1 et P2 assure un lien virtuel unique entre ladite Balise et ledit emplacement sur INTERNET (URL). Par conséquence un lien virtuel et unique relie les informations déposées audit emplacement unique sur INTERNET (URL), et l'objet ou lieu marqué par ladite Balise. Ledit lien virtuel peut être implémenté sur un dispositif de télécommunication portable (ex. téléphone portable, ordinateur portable, ...) sans avoir besoin d'être mis à jour, à cause de la mise en place desdites Balises supplémentaires.

P3. Une plate-forme d'information (7, 8, 9, 12 Figure 2) constituée des pages Internet préalablement renseignées par le détenteur de la balise via l'interface dédiée sur internet. Une page WEB est créée avec le nom correspondant au lien créé par ledit programme installé sur ledit téléphone portable (6 Figure 2), la page WEB « AdresseMAC.html » est disposée sur le serveur WEB (7 Figure 2) pointé par ledit nom de domaine Internet.

La page Web « AdresseMAC.html » affiche lesdites informations à partir de ladite base de données (12 Figure 2) prévue par l'administrateur de la balise (5 Figure 2) pour l'utilisateur.

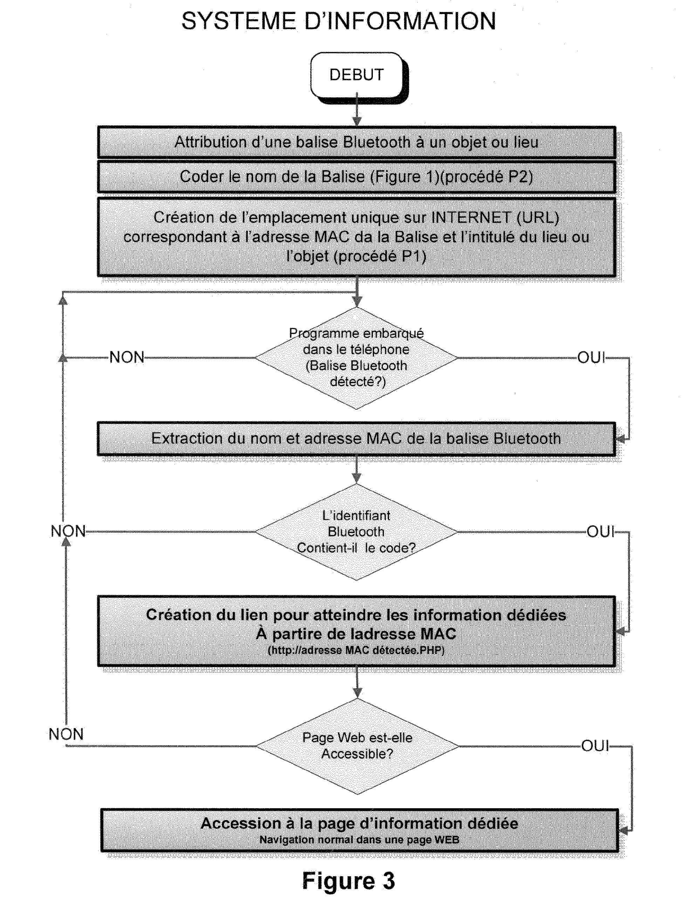

P4. La figure 3 décrit l'acheminement logique utilisé par le système d'information proposé par la présente invention. Il démontre la chronologie des actions et des procédés permettant, l'identification des informations concernant un objet ou un lieu et ensuite, l'acheminement de ces dites informations à l'utilisateur final.

Voici un exemple pour mieux comprendre le fonctionnement.

Un restaurateur met en place une balise Bluetooth® (3 Figure 2) pré configuré à émettre un code (1 Figure 1) unique référencé à son restaurant. Avec une interface dédiée (9 Figure 2), il se rend sur Internet afin de renseigner les informations concernant les spécialités du restaurant ainsi que les prix, (ex. Le plat du jour 15€ ou menu enfant steak frite + boisson 7€).

La balise (3 Figure 2) est détectable sur une distance de 100 mètres, dans le cas d'un grand restaurant plusieurs balises peuvent être référencées.

Une personne non-voyante (4 Figure 2) équipée d'un téléphone portable (6 Figure 2) entre dans le restaurant, (la plupart des non-voyants possèdent un téléphone portable équipé d'une synthèse vocale et Internet), elle peut alors activer ledit logiciel, (installé préalablement sur son téléphone) et détecter la balise.

Le logiciel reconnaît la balise et ouvre un accès Internet sur le téléphone portable(en utilisant les procédés P1 et P2) vers la page dédiée du restaurant.

La personne non-voyante peut écouter (à l'aide d'un casque, si le restaurant est bruyant) le contenu de la page du restaurant, le plat du jour 15€ ou les ingrédients dans la pizza du chef, elle peut même mémoriser les articles en validant sur les menu pour montrer au serveur lors de la commande.

Dans le cas d'un touriste allemand il s'agit tout simplement de pouvoir lire le contenu des menus en allemand avec ledit logiciel qui ouvre automatiquement des pages allemand du même restaurant.

Un publicitaire qui installe ladite balise référencée sur son panneau publicitaire peut enregistrer les énoncés des affiches sur Internet dans son espace dédié. Une personne non-voyante détecte la balise publicitaire avec ledit logiciel dans son téléphone, elle est avertie et peut choisir de consulter ou pas la publicité.

Avec les informations fournis par le code (1 Figure 1) émis par la balise (3 figure 2), le logiciel est capable de distinguer des différents type de balise, Balise restaurant, balise PUB, ou même des balises d'alerte pour des travaux de voirie avertissant les non-voyants des travaux de voirie et le trottoir obstrué ou modifié.

## Revendications

1. Procédé et le système d'accession à au moins une information (10 Figure 2) prédéfinie et dédiée à un lieu (Ex. un restaurant, un bâtiment, ...) ou un objet (un panneau publicitaire, un tableau,...) à partir d'un dispositif de télécommunication portable (téléphone portable, ordinateur portable,...) en détectant un dispositif indicateur sans fil
(BLUETOOTH®, WIFI, IRDA,...) (1 Figure1) codé, comprenant les étapes suivantes :
- Marquage d'un lieu ou un objet avec au moins un dispositif indicateur sans fil (3 Figure 2) présentant au moins un code (1 Figure 1) inclus dans l'identifiant diffusé (2 Figure 1), et au moins une caractéristique unique (Ex. Adresse MAC d'un dispositif WIFI ou BLUETOOTH®, UUID Universally Unique Identifier,...) (12 Figure 1).
- Création d'une page WEB (C'est un document informatique qui peut contenir du texte, des images, des formulaires à remplir et divers autres éléments multimédias et interactifs) accessible par INTERNET avec une URL (Identifiant Uniformisé de Ressource)) unique afin de stocker ladite information. Ladite URL doit être crée égale au résultat d'un algorithme unique utilisant la caractéristique unique dudit dispositif indicateur sans fil.
- Implémentation dudit algorithme dans un programme installé dans un dispositif de télécommunication portable (téléphone portable, ordinateur portable,...) ledit programme doit pouvoir récolter des informations nécessaires audit algorithme(en utilisant le composant sans fil du dispositif de télécommunication portable).
- La détection et la reconnaissance dudit dispositif indicateur sans fil par ledit programme en utilisant un code unique mais présent dans l'identifiant diffusé par toutes les dites dispositifs indicateurs sans fil.

2. Procédé de la création d'un lien unique entre un objet ou un lieu et les informations les concernant, implémentés sur au moins deux médias distincts dont un dispositif indicateur sans fil (BLUETOOTH®, WIFI, IRDA,...) (3 Figure 2), l'autre média étant un dispositif de télécommunication portable (téléphone portable, ordinateur portable,...) ou préférentiellement un téléphone portable, selon la revendication 1, ledit lien étant décomposé en trois parties :
Une des parties concerne au moins un dispositif indicateur sans fil (BLUETOOTH®, WIFI, IRDA,...) possédant une caractéristique unique (Ex. Adresse MAC d'un dispositif WIFI ou BLUETOOTH®, UUID Universally Unique Identifier,...) et un identifiant simple (Ex. SSID, BLUETOOTH® Divise Name, ...) diffusés (en BLUETOOTH®, en WIFI, en IRDA,...) par ledit dispositif indicateur sans fil. Ledit identifiant simple doit inclure un code unique d'au moins 5 caractères qui permette l'identification dudit dispositif indicateur sans fil, lors d'une phase de détection et de reconnaissance dudit dispositif indicateur sans fil.
Une des parties concerne, un emplacement unique réservée sur un serveur informatique accessible par Internet ou par un réseau informatique, pour déposer des informations concernant un objet ou un lieu. Ledit emplacement unique (URL) doit être créé égal au résultat d'un algorithme unique utilisant la caractéristique unique dudit dispositif indicateur sans fil. Par exemple nous allons réserver le nom de domaine suivant www.MonDomaine.fr, et nous allons créer, 2 emplacements avec les URL suivants
1. www.MonDomaine.fr/**00015b5zde**.html
2. www.MonDomaine.fr/**00052223ee**.html
Les parties mise en gras des URL correspondent respectivement à l'adresse MAC (ladite caractéristique unique) des Balise1 et Balise2. Lesdites URL 1 et 2 sont le résultat de l'algorithme ci-dessous.
(www.MonDomaine.fr/)+L'adresse MAC de la BALISE détectée+ (.HTML)
La troisième partie concerne un programme installé sur ledit dispositif de télécommunication portable capable de récolter ladite caractéristique unique dudit dispositif indicateur sans fil.
Ledit programme a le rôle de concrétiser le dit lien unique en affichant les informations déposées audit emplacement unique (URL). Ladite URL est obtenue suite à l'application dudit algorithme à ladite caractéristique unique dudit dispositif indicateur sans fil. Ladite caractéristique unique est récupérée suite à une phase de détection et de reconnaissance dudit dispositif indicateur sans fil grâce audit code inclus dans ledit identifiant simple.
Conforme au procédé ledit programme relie ledit dispositif indicateur sans fil à ladite URL. Par conséquence en utilisant ledit dispositif indicateur sans fil en tant que marqueur d'un objet ou un lieu, nous réalisons le lien entre ledit objet ou ledit lieu et les informations déposées à ladite URL.

3. Procédé de la détection et de la reconnaissance d'un groupe dudit dispositif indicateur sans fil, sans avoir besoins de consulter une liste exhaustive de chaque dispositif indicateur sans fil stocké dans une table de référencement selon le procédé des revendications 1 ou 2 **caractérisé en ce qu'**il inclut dans les informations émises par ledit dispositif indicateur sans fil un code unique mais qui est commun à tous les dispositifs indicateurs sans fil, pouvant être recherché. Par exemple si on utilise un émetteur BLUETOOTH® en tant que dispositif indicateur sans fil (une Balise) (3 Figure 2), ladite Balise diffuse un identifiant de 20 caractères (2 Figure 1) en plus de son adresse MAC unique, un code unique d'au moins 5 caractères (1 Figure 1) est intégré dans l'identifiant de chaque Balise, par exemple, un nom nouvellement inventé (ex. LODESH1). Lors de la recherche dudit code, par ledit logiciel installé sur le téléphone portable, la simple détection dudit code, permet l'identification de ladite Balise.
